Europäisches Patentamt

European Patent Office

Office européen des brevets

(11) Veröffentlichungsnummer: **0 318 137**
**A2**

## (12) EUROPÄISCHE PATENTANMELDUNG

(21) Anmeldenummer: 88308778.5

(22) Anmeldetag: 21.09.88

(51) Int. Cl.4: **C04B 16/06 , D01F 8/04**

(30) Priorität: 24.11.87 HU 524587

(43) Veröffentlichungstag der Anmeldung:
31.05.89 Patentblatt 89/22

(84) Benannte Vertragsstaaten:
AT CH DE ES FR GB IT LI NL SE

(71) Anmelder: MAGYAR TUDOMANYOS
AKADEMIA TERMESZETTUDOMANYI
KUTATOLABORATORIUMAI
Budaorsi ut 45
H-1112 Budapest(HU)

(72) Erfinder: Szekely, Tamas, Dr.
Balogh Adam u. 7/a
H-1026 Budapest(HU)
Erfinder: Nagy, Gabor, Dr.
Sarfu u. 27
H-1156 Budapest(HU)
Erfinder: Seder, Julianna, Dr.
Rajik L. u. 112
H-1133 Budapest(HU)
Erfinder: Dobos, Jozsef
Honved u. 23
H-7400 Kaposvar(HU)
Erfinder: Dezsenyi, Istvan, Dr.
Tarcali u. 22.b
H-1113 Budapest(HU)
Erfinder: Babos, Laszlo
Kikelet u. 26
H-1126 Budapest(HU)
Erfinder: Gecsenyi, Gyula
Szasz Karoly u. 6
H-1027 Budapest(HU)
Erfinder: Varga, Bela
Minkasor sor 2
H-7400 Kaposvar(HU)

(74) Vertreter: Griffin, Kenneth David et al
Saunders & Dolleymore 9, Rickmansworth
Road
Watford Hertfordshire WD1 7HE(GB)

(54) Verfahren zur Herstellung von Körpern, insbesondere Bauteilen aus hydraulisch gebundenen, zuhärtenden Materialgemischen und diesen zugegebenen Verstärkungsfasern, sowie Verfahren zur Produktion von Kunststoffasern mit aufgerauhter Oberfläche.

(57) Einer hydraulisches Bindemittel enthaltenden Matrix werden aufgerauhte Oberfläche aufweisende Kunststoffasern zugemischt. Die Fasern werden aus durch inerte Körnchen (2) gebildeten Füllstoff enthaltendem Kunststoff durch Ziehen und Strecken hergestellt. Die durch das Strecken gelockerten inerten

Körnchen (2) werden durch Reibeinwirkung aus der Faser (1) entfernt. An der Stelle der inerten Körnchen (2) bleiben Hohlräume (4) zurück, aus denen aufgerissene Fäserchen (5) hervorstehen. Die Oberfläche anderer nicht herausgefallenen Körnchen (2) wird freigelegt. Die nach vorstehendem effektiv aufgerauhte Flächen aufweisenden Fasern (1) werden sicher und gleitfrei in der Matrix festgehalten

Fig. 1

# Verfahren zur Herstellung von Körpern, insbesondere Bauelementen aus hydraulisch gebundenen, zuhärtenden Materialgemischen und diesen zugegebenen Verstärkungsfasern, sowie Verfahren zur Produktion von Kunststoffasern mit aufgerauhter Oberfläche

Die Erfindung bezieht sich auf ein Verfahren zur Herstellung von Körpern, insbesondere Bauelementen aus hydraulisch gebundenen, zuhärtenden Materialgemischen und diesen zugegebenen Verstärkungsfasern. Gegenstand der Erfindung ist auch eine Fertigungstechnologie für aufgerauhte Kunststoffasern.

Nachteilie der aus mit hydraulischen Bindemitteln, z.B. Zement oder Gips, hergestellten Materialgemischen geformten Körper, so z.B. von Betonelementen, Gipsplatten und ähnlichen Produkten, ist ihre Sprödigkeit, Rissempfindlichkeit sowie ihre Druckfestigkeit wesentlich unterschreitende Zugfestigkeit. Zur Beseitigung dieser Nachteile werden herkömmlicherweise Betonstahleinlagen, Armaturen verwendet, was jedoch die auf die Sprögigkeit des Materials zurückzuführenden nachteiligen Erscheinungen, namentlich das Entstehen von Rissen - z.B. Schrumpfungsrissen - die unter Schlageinwirkungen eintretenden Schäden, Scharten, Brüche usw., nicht beseitigt.

Zur Beseitigung der Sprödheit pflegt man dem rohen zuhärtenden Gemisch Verstärkungsfasern zuzugeben. Diese Fasern bilden im Gegensatz zu der im allgemeinen konzentriert angeordneten Betonstahlbewehrung eine im ganzen Körper verhältnismässig dicht und gleichmässig verteilte Armierung (Bewehrung). In diesem Falle ist also die Armierung ein feines Fasergerüst, das durch das eine gleichmässige Verteilung ergebende Einmischen der Schnittfasern in das hydraulisch gebundene zuhärtende Material gesichert werden kann.

Die faserverstärkten Gemische werden durch Verwendung von Fasern der verschiedensten Stoffe hergestellt. Seit längster Zeit und am meisten verbreitet werden die natürlichen Asbestfasern verwendet, wegen deren verhältnismässigen Kürze hingegen die Sprödheit der aus den asbestfaserverstärkten Gemischen gefertigten Platten und Körper im Vergleich zu den faserverstärkungslosen Materialien in keinem wesentlichen Masse zurückgeht, obwohl ihre Zugfestigkeit die derjenigen wesentlich überschreitet.

Aus dünne, geschnittene Stahl-, Glas- und Kunststoffasern hoher Festigkeit enthaltenden, zuhärtenden Materialgemischen gefertigte Bauelemente sind ebenfalls bekannt. Die Sprödigkeit und Rissempfindlichkeit dieser Bauelemente ist zwar vermindert, eine weitläufigere Verwendung wird jedoch im Falle der Stahlfasern durch die Korrosion, Im Falle der Glasfasern hingegen durch die infolge der Basizität des Zements auftretende Faserstoffbeschädigung verhindert.

Die geschnittenen Kunststoff-Stapelfasern sind zwar keiner Korrosionsgefahr ausgesetzt, ihre Verwendung ist jedoch mit zwei grundlegenden Problemen verbunden: einerseits stösst die gleichmässige, zusammenklumpungsfreie Vermischung der Fasern in der Matrix an Hindernisse, andererseits kann das Einbetten der hydrofobe Eigenschaften aufweisenden Kunststoffasern in die Wässrige Matrix, d.h. ihr ausziehungsfreies Einbinden in den erhärteten, d.h. verfestigten Körper schwer gesichert werden.

Die gleichmässige Vermischung der Kunststoff-Stapelfasern wird grundlegend durch die Aufladung der Fasern mit statischer Elektrizität und ihr in deren Ergebnis eintretendes Zusammenkleben gehindert. Auf die Beseitigung dieses Problems richtet sich die aus der britischen Patentschrift Reg.-Nr. 2 035 990 erkennbare Lösung, wonach die Fasern mit einem Antistatisiermittel überzogen oder in ihrem Material antistatisierte Fasern verwendet werden. Gemäss der USA-Patentschrift 4 039 492 wird die Verteilbarkeit der Fasern in dem nassen Medium durch deren Oberflächen-Hydrofilisierung gesichert.

Aus der BRD-Patentschrift 28 16 457 ist die Verwendung von Kunststoffasern mit hydrofilem Charakter in einem hydraulischen Bindemittelgemisch erkenntlich.

Das Wesentliche der in der schweizerischen Patentschrift 592 216 beschriebenen Ausführungslösung besteht darin, dass inden Beton geschnittene fibrillierte Faserstapel gemischt werden. Die gleichmässige Verteilung der Fasern in der Matrix wird dadurch gesichert, dass die Faserbündel im Ergebnis der im Verlaufe des Einmischens auftretenden mechani schen Wirkungen allmählich in Elementarfasern zerreissen und sich die abreissenden Faserstücke inzwischen in der Matrix vermischen.

Nach der ungarischen Erfindung, Hinterlegungsnummer 117/81, wird die herausziehungsfreie Einbettung der Kunststoffasern in dem erhärteten Körper durch eine auf die Faseroberfläche vorhergehend aufgetragene Übergangsschicht gesichert, wogegen im Sinne der ungarischen Erfindung, Hinterlegungsnummer 1766/83, das Einbinden der aus Folien geschnittenen und fibrillierten Fasern in die Matrix auf die Weise verbessert, dass die Fibrillation der Fasern periodisch aufgehoben wird.

Das Wesentliche der aus der britischen Patentschrift 2 025 841 erkenntlichen Lösung besteht darin, dass im Verlaufe der Herstellung der Kunststoffasern auf der Oberfläche der Fasern Ausstülpungen herbeigeführt werden, die dann die Fasern in dem erhärteten Material sozusagen verankern und dadurch ein Weitergleiten verhindern. Die Ausstülpungen entstehen im Verlaufe der durch Extrudieren erfolgenden Herstellung der Fasern demzufolge, dass das Grundmaterial der Fasern ein Gemisch von Polyolefinen mit unterschiedlichen Erweichungspunkten ist, bzw. dass in das thermoplastische Polyolefin ein wärmeerhärtendes Harz zugemischt und die Fasern aus diesem Gemisch hergestellt werden. So werden die Ausstülpungen durch die im Verlaufe der Produktion in das erweichte Material eingebetteten, daraus hervorstehenden, nicht erweichten Stoffteile gebildet. Die die Ausstülpungen bewirkende heterogene Materialzusammensetzung hat jedoch schwerwiegende Nachteile. Die Zerreissfestigkeit der Fasern beträgt max. 2700 kg/cm² (zwischen 1,1-3,5 g/Denier-Werten veränderlich), und dieser Wert macht insgesamt nur 60-70 % der Festigkeit der Fasern aus homogenem Material aus. In ähnlichem Masse vermindert sich auch der Elastizitätsmodul der die Ausstülpungen enthaltenden Fasern, der im Gegensatz zu dem bei Fasern aus homogenem Material sicherbaren Wert von etwa 40 000 kg/cm² lediglich 11.000-26.000 kg/cm² beträgt. Der Rückgang der vorgenannten Parameter erscheint markant in der geringeren Effektivität der Faserverstärkung, der Verminderung der Festigkeit des erhärteten Endproduktes. Einen weiteren Nachteil bedeutet die fertigungstechnologische Gebundenheit, dergemäss Ausstülpungen auf der Oberfläche nur mit der Herstellung von verhältnismässig dicken Fasern gewährleistet werden können; die Fasern müssen eine Dicke (Stärke) von 0,7-2,0 mm aufweisen (in Faserfeinheit ausgedrückt 3400-9800 Denier), und diese Faserstärke ist um eine Grössenordnung (den Faserfeinheitsindex gesehen um zwei Grössenordnungen) grösser als die Stärke der Fasern mit glatter Oberfläche. Bei gleicher Faserdosierung (Fasermenge) sichern die dicken Fasern keineswegs die feine Verteilung der Armierung des Gemisches, die zur effektiven Erhöhung der Spreng- und Schlagfestigkeit erforderlich ist. Die Erhöhung der zugeführten Fasermenge ist hingegen wegen der Verdichtbarkeit des Gemisches begrenzt, die durch die dicken und demzufolge starren Fasern bereits im vornherein ungünstig beeinflusst wird. Die Erhöhung der Fasermenge hat eindeutig auch eine ungünstige wirtschaftliche Auswirkung.

Aus vorstehenden Ausführungen folgt, dass zur Zeit die einwandfreie Verstärkung der mit hydraulischem Bindemittel hergestellten zuhärtenden Matrixen (Gemische) mit geschnittenen Kunststoffasern (Stapelfasern) nicht als gelöst angesehen werden kann. Die eine glatte Oberfläche aufweisenden Fasern - die über zufriedenstellende fasermechanische Parameter verfügen - können in ihrer hydrofobisierten und antistatisierten Form in der nassen Matrix zwar vermischt werden, wobei jedoch die Ausnutzung ihrer günstigen mechanischen Eingenschaften in dem erhärteten (verfestigten) Endprodukt durch ihre unzufriedenstellende Verankerung - dem Gleiten der Fasern - gehindert wird. Die Fasern hingegen, die mit entsprechende Verankerung gewährleistenden Ausstülpungen versehen sind beeinträchtigen - im Ergebnis der ungünstigen Parameter der Fasern -die Wirtschaftlichkeit der Bauteilefertigung infolge der zwangsläufig in grösserer Menge erfolgenden Faserdosierung, was gleichzeitig auch hinsichtlich der Einarbeitbarkeit und Verdichtbarkeit des rohen Gemisches von ungünstiger Wirkung ist.

Aufgabe der Erfindung ist, aus dem stapelfaserverstärkten, mit hydraulischem Bindemittel angesetzten, zuhärtenden Gemisch die Herstellung von derart guten und gleichmässige Qualität aufweisenden Endprodukten - z.B. Bauteilen, Platten oder sonstigen geometischen Körpern - zu ermögliche, in denen die ein feines Fasergerüst ergebende günstigst gleichmässige Verteilung und einwandfreie griffige Einbettung der über optimale mechanische Parameter verfügenden Fasern gewährleistet ist.

Grundlage der Erfindung ist die Erkenntnis, dass in dem Falle, wenn bei Beibehaltung der Homogenität des Kunststoffmaterials der Faser die Vergrösserung der Oberfläche und die gute Einbettung der Fasern in die Matrix gesichert werden kann, die Herstellung eines feinvertielten Fasergerüstes in der Matrix aus entsprechend dünnen Fasern und im Ergebnis eines über vorzügliche mechanische, physikalische Eigenschaften verfügenden Endproduktes möglich wird. Unsere weitere Erkenntnis ist, dass die die gewünschten Eigenschaften aufweisenden Elementarfasern aus durch inerte Körnchen gebildeten Füllstoff enthaltendem Kunststoff durch Verstrecken und Reiben hergestellt werden können, wobei im Ergebnis dieser Arbeitsgänge ein Teil der in der Nähe der Oberfläche der Fasern befindlichen inerten Körnchen aufgelockert und herausgerissen wird und sich an ihrer Stelle auch über aufgerissene Fäserchen verfügende spindelförmige Hohlräume auf der Oberfläche bilden, die die Einbettung in die mit hydraulischem Bindemittel angesetzte feste Matrix effektiv fördern; ander entlang der Oberfläche befindliche Körnchen bleiben auch nach der Reibeinwirkung in der Faser eingebettet, wobei jedoch ihre Oberfläche freigelegt wird und aufgrund ihrer Beschaffenheit für das hydraulische Bindemittel vorzügliche, wesentlich bessere Bindungsmöglichkeiten als der Kunststoff gewährleistet.

Aufgrung dieser Erkenntnisse wirde die gestellte Aufgabe im Sinne der Erfindung mit Hilfe eines Verfahrens gelöst, in dessen Verlaufe aus hydraulischen Bindemittel, Zuschlagmaterial und Wasser eine Matrix hergestellt, dieser Kunststoffasern beigemischt werden und das Gemisch - gegebenenfalls nach seiner Formung - erhärtet oder/und erhärten gelassen wird, wobei das Wesentliche des Verfahrens darin besteht, dass der Matrix durch inerte Körnchen gebildete Füllstoffe enthaltende und durch Herausreissen der entlang der Oberfläche liegenden inerten Körnchen aufgeraute Oberfläche aufweisende Kunststoffasern zugemischt werden. Hierbei ist zu unterstreichen, dass der Begriff des nach diesem Verfahren gefertigten "Korpers", weitesmöglich auszulegen ist und sich neben verschiedenste Formen aufweisende Bauelementen, Bauteilen und Beuplatten z.B. auch auf Betonflächen aufgetragene Ausgleichsschichten sogar Wandbewurf und Hohlräume ausfüllende Formlose Materialmassen usw. erstreckt.

Nach einer vorteilfahren Verwirklichungsweise der Verfahrens werden Kunststoffasern in einen Menge von 0,05-20,0 Masse%, vorzugsweise 0,1-1,0 Masse% zur Matrix - auf deren trockene, wasserfreie Masse bezogen - zugemischt werden. Die Länge der Monofasern ist im allgemeinen 10-100 mm, vorzugsweise 20-60 mm und ihr Durchmessen (Stärke) ist 0,04-0,8 mm, vorzugsweise 0,1-02 mm. Die Monofasern sind zweckmässig mit aus anorgansichem Stoff bestehenden inerten Körnchen von Durchmesser 1-30 $\mu$m gefüllt.

Die Monofasern bestehen im allgemeinen aus Polyolefin, zweckmässig aus Polypropylen und/oder Polyäthylen und/oder deren Gemisch und/oder deren Kopolymeren.

Vorteilhaft kann weiterhin sein, wenn der Matrix formgestaltete, veränderliche Querschnittsform aufweisende oder/und gewellte Kunststoffasern zugegeben werden. Die Fasern können z.B. in gleichen oder im wesentlichen gleichen Abständen angeordnete abgeplattete Formationen enthalten. Die eine periodische Musterung der Fasern ergebende Formgestaltung kann z.B. so erfolgen, dass im Verlaufe der Faserproduktion nach der Thermofixierung das noch warme, z.B. eine Temperatur von 60-80 °C aufweisende Faserbündel zwischen gerippten Walzen so hindurchgeführt wird, dass dabei die einzelnen Fasern regelmässig nebeneinander geordnet, d.h. in einer Ebene liegend angeordnet sind. Demzufolge hinterlassen die Rippen der Walzen periodische in den Fasern- im Ergebnis des Kaltflusses - Eindrücke gleichen Ausmasses. An den eingedrückten Stellen kann die Faserstärke sogar auf 70 % des ursprünglichen Durchmessers zurückgehen, d.h. die Faser wird abgeplattet, wobei jedoch ihre Querschnittsfläche unverändert bleibt.

Für eine weitere Verwirklichungsweise des Verfahrens ist kennzeichnend, dass zur Matrix verdrehte und in ihrem verdrehten Zustand ( in der verdrehten Form) durch Wärmezufuhr fixierte Kunststoffaserbündel zugemengt werden.

Die Faserbündel sind zweckdienlicherweise 15-70 mm lang und um ihre geometrische Achslinie um 90-360°, vorteilhafterweise um 180-270° verdreht.

Sämtliche vorgenannte Faserarten können auch antistatiert und/oder hydrofilsiert sein.

Die Zuführung der Fasern in verdrehter (gezwirten) Form sowie in der Form von Faserbündeln fördert die gleichmässige zusammenklumpungsfreie Verteilung der Einzelfasern in der Matrix. Das Auflösen bzw. Zerlegen der in der üblichen - unverdrehten - Form zugeführten Folien-Faserbündel zu Einzelnfasern erfordert eine grosse mechanische Arbeit. Das bedeutet nachteiligerweise ein Verlängerung der 1-2 Minuten langen Mischdauer um 3-4 Minuten. Gleichzeitig ist auch die zuführbare Fasermenge verhältnismässig gering, insgesamt nur 1-2 kg Faser/m³. Das aus dem Drall der Monofile (Monofasern) geschnittene Faserbündel zerfällt hingegen im Verlaufe des Mischvorganges unter der Einwirkung minimaler mechanischer Arbeit leicht und die Einzelfasern verteilen sich gleichmässig in der Matrix. Der Mischzeitzuwachs beträgt im Falle der Zugabe von verdrallten Faserbündeln nur 20-40 sec und die zuführbare Fasermenge kann pro Kubikmeter sogar 10-20 kg erreichen.

Gegenstand der Erfindung ist auch ein zur Herstellung von Kunststoffasern mit aufgerauter Oberfläche dienendes Verfahren, mit dem aus einem Plastgrundstoff durch Strecken und Ziehen Fasern hergestellt werden, wobei für das Verfahren kennzeichnend ist, dass die Fasern aus einem durch inerte Körnchen gebildeten Füllstoff enthaltenden Kunststoff hergestellt werden und die infolge der Faserverstreckung entlang der Oberfläche gelokkerten inerten Körnchen durch Reibeinwirkung aus der Faser herausgerissen und an ihrer Stelle und/oder entlang dieser Stelle auch aufgerissene Fäserchen enthaltende Hohlräume erzeugt werden und - gegebenenfalls - die Oberfläche der inerten Körnchen durch eine Reibarbeitsgang freigelegt wird.

Ein zur Herstellung von derartigen aufgeraute Oberfläche aufweisenden Fasern verwendbarer Kunststoff ist z.B. aus der ungarischen Patentschrift Nr. 167 063 erkennbar.

Die Erfindung wird im weiteren aufgrund der beigelegten Zeichnung detailliert beschrieben, die die Art und Weise der Herstellung der zum erfindungsgemässen Verfahren verwendeten Fasern in einem wesentlich grösseren Massstab als die reale Grösse veranschaulicht. Auf der Zeichnung sind in

Fig. 1 ein Faserstück in dem Zustand vor dem Nachzieharbeitsgang in Seitenansicht;

Fig. 2 ein nach dem erfindungsgemässen Verfahren hergestelltes Einzelfaserstück in dem endgültigen Zustand zu sehen, in dem die Zumischung zur Matrix erfolgt.

Das Material der zum Verfahren verwendeten Fasern ist ein - übrigens an sich bekanntes - inerten Füllstoff enthaltendes Polyolefin. Der Füllstoff des z.B. Polypropylen-, Polyänthylen- oder lineares Polyäthylen-Grundmaterials ist eine eine durchschnittliche Korngrösse von 3 $\mu$m aufweisendes festes körniges Material, z.B. Kreidenpulver oder Talkum. Das Fasergrundmaterial enthält neben dem festen körnigen Füllstoff im allgemeinen auch derartige Elastomere und Tenside, die die Zusammenarbeit der Körnchen mit der Polyolefinmatrix im wesentlichen Masse verbessern. Eine bekannte Eigenschaft der mit einem derartigen Füllstoff gemischten Kunststoffe ist, dass im Verlaufe der Faserproduktion während des Faserextrudierens und des Nachstreckvorganges des Ausmass des Streckens und die Orientierung der Makromoleküle in der Umgebung der eingeschlossenen Füllstoffkörnchen lokal grösser als in dem übrigen Bereich des Materials ist, was die Zerreissfestigkeit und den Elastizitätsmodul des Materials insgesamt erhöht, obwohl die eingebetteten inerten Füllstoffkörnchen den nützlichen Querschnitt der einen dünnen Durchmesser von etwa 100-200 $\mu$m aufweisenden Fasern vermindern.

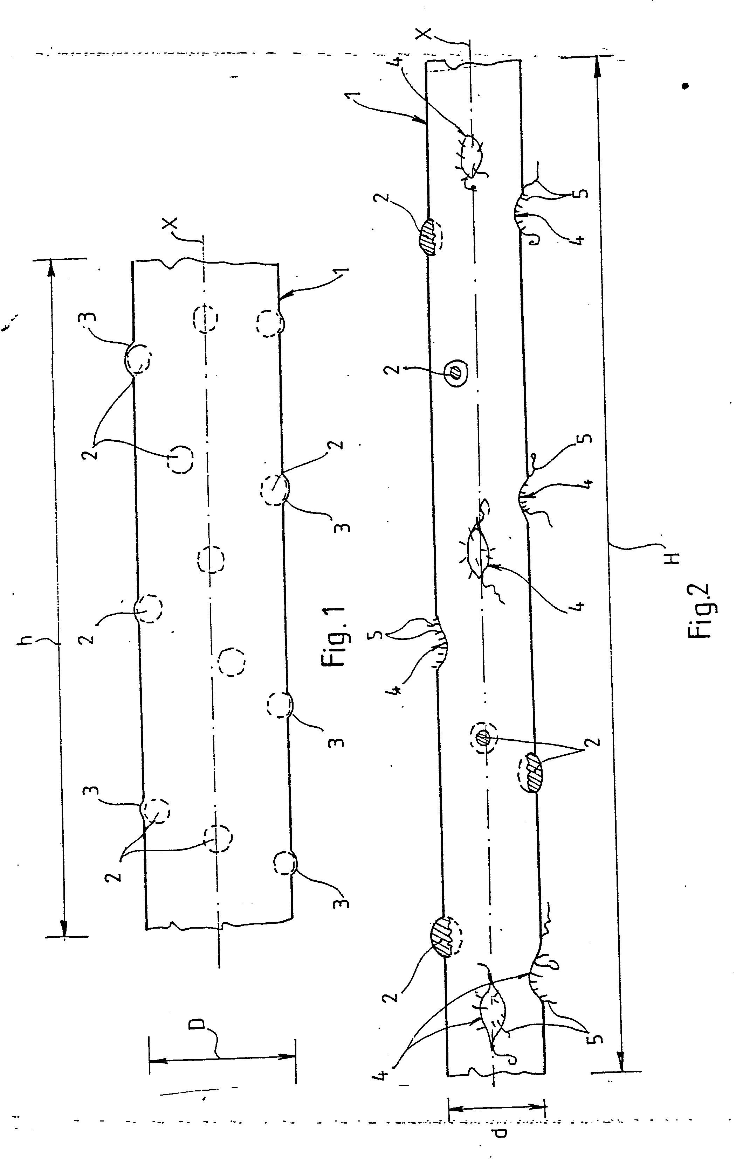

In Fig. 1 wurde ein aus vorstehendem Material hergestelltes Faserstück in dem Zustand vor dem Aufrauh- und Streckarbeitsgang dargestellt und im ganzen mit der Bezugsnummer 1 bezeichnet. Die Länge des Faserstückes 1 wurde mit $\underline{h}$, sein Durchmesser mit $\underline{D}$ bezeichnet; die entlang der Faserfläche eingebetteten inerten Körnchen 2 wurden mit gestrichelten Linien veranschaulicht, und wie ersichtlich, weist die Faser dort wo die inerten Körnchen 2 angeorndet sind, entlang ihrer Oberfläche Auswölbungen 3 auf.

Wird das in Fig. 1 dargestellte Faserstück 1 weitergestreckt, so erhöht sich dessen Länge $\underline{h}$ auf die in Fig. 2 dargestellte Länge H, wobei sein Durchmesser D sich hingegen auf $\underline{d}$ vermindert $(H>h$ und $d< \underline{D})$.

Im Ergebnis des Zieh-Streckarbeitsganges lockern sich die nahe der Faseroberfläche befindlichen Füllstoffkörnchen - d.h. die inerten Körnchen 2 - und in ihrer Umgebung entstehen zur geometrischen Längsachse x der Faser 1 parallele (spindelförmige) Hohlräume, aus denen die Körnchen 2 bereits mit einem geringen Kraftaufwand entfernt werden können. Im Sinne der Erfindung wird diese die Körnchen entfernende Kraft durch Reiben der Fasern ausgeübt. Anstelle der entfernten inerten Körnchen 2 bleiben Hohlräume (Eintiefungen) 4 zurück und die aus der die anstelle der Hohlräume befindlichen Körner früher umhüllenden Kunststoffschicht (siehe Ausbeulungen 3 in Fig. 1) durch Fibrillation sich bildenden Polimerlamellen reissen zufolge der Reibeinwirkung zum Teil weiter auf, zum Teil ab, sodass auf der Oberfläche der Hohlräume 4 bzw. in ihrer Umgebung Rillen und kürzere bzw. längere Fäserchen 5 zurückbleiben, die dann die spezifische Oberfläche der Faser 1 im wesentlichen Messer vergrössern.

Die in der Nähe der Faseroberfläche aber ein wenig tiefer angeordneten inerten Körnchen 2 werden unter Einwirkung des Streckens und Reibens nicht herausgelöst, wobei sich jedoch die über ihnen befindlichen Auswölbungen 3 (Fig. 1) abtrennen, sodass die Oberfläche der Körnchen freigelegt wird. Diese freigelegten Körnchenflächen wurden in Fig. 2 durch Straffierung hervorgehoben. Auf diesen freigelegten Oberflächen der inerten Körnchen 2 haftet das hydraulische Bindemittel wesentlich besser als auf der Kunststoffoberfläche, sodass diese Flächen die hydrofoben Eigenschaften der gesamten Faser 1 erhöhen und die chemische Verbindung mit der Matrix verbessern.

Die Oberflächenmorphologie der Fasern erräht im Verlaufe der Zumischung der Fasern 1 zur Matrix weitere Aenderungen, in deren Ergebnis sich die schon ohne dies günstigen Eigenschaften der Fasern weiter verbessern. Die im Verlaufe des Mischens auf die Faseroberfläche ausgeübte Reibwirkung der Körnchen (Zement, Sand, Kies usw.) der Matrix und die in gewissem Mischen-Typen aufgetrenen Scher- und Druckwirkungen erhöhen nämlich - zufolge der Fibrillationsneigung des in der Umgebung der Körnchen partial stärker gestreckten Fasermaterials - die Fibrillation.

Die mechanischen Parameter der in vorstehend beschriebener Weise hergestellten Fasern 1 sind gleich gut oder besser als die der aus füllstofflosen Grundmaterialien gefertigten, glatte Oberflächen aufweisenden Fasern, wobei das auf der Faser-Oberfläche im wesentlichen in einer gleichmässigen Verteilung sich herausbildende Hohlraumsystem sich mit den Kristallmolekülen des hydraulischen Bindemittels z.B. des Zements auffüllend die Einbindung und schluppfreie Einbettung der Fasern 1 gewährleistet. Die Effektivität der Einbindung wird dadurch auch weiter erhöht, dass sich einerseits die Fäserchen 5 (Fig. 2) in den Hohlräumen 4 in das hydraulische Bindemittel eingliedern und einbetten, andererseits, dass die freigelegten Oberflächen der inerten Körnchen 2 (siehe straffierte Gebiete in Fig. 2) - wie bereits erwähnt - wesentlich besser an das hydraulische Bindemittel als die Kunststoffoberfläche der Faser 1 haften. Diese Faser verfügt im Vergleich zu den in der Einleitung beschriebenen mit Auswölbungen hergestellten Faserarten über eine um etwa 100 % grössere Zerreissfestigkeit und einen um etwa 50 % grösseren Elastizitätsmodul, was natürlich auch in den günstigeren mechanischen und phy sikalischen sowie Wirkschaftlichleitsparametern der unter Verwendung derartiger Fasern hergestellten Produkten sowie in der leichteren Einarbeitbarkeit des rohen Gemisches (der Matrix) in Erscheinung tritt.

Durch das geeignete Auswählen der Körner der Matrix und der Mischtechnologie (Mischerart) ist zu erreichen, dass die Oberfläche der die inerten Körnchen enthaltenden geschnittenen Fasern nicht durch den vorläufigen, vor dem Mischen der Matrix vorgenommenen Abzeibungsvorgang, sondern selbst durch den Matrix-Mischvorngang im gewünschten Maue ausgerauht wird. In diesem Fale werden die sich entlang der Oberfläche der Faser befindlichen inerten Körnchen nur während des Mischens der Matrix aus den Fasern ausgerissen, und bilden sich Hohlräume und Fäserchen, und bleiben in den Fasern eingebettete Körnchen, die freigelegte Oberfläche aufweisen.

Die Erfindung wird im weiteren anhand von Beispielen eingehender beschrieben.

Beispiel 1

Nach dem erfindungsgemässen Verfahren werden 7-15 mm starke Bauelemente für Gebäudefassadenverkleidungen gefertigt. Die Matrix, d.h. das rohe Gemisch wird aus 100 Masseteilen 350 PC-Zement und 200 Masseteilen Sand Korngrösse 0-4 mm unter Zugabe von soviel Wasser angesetzt, dass der Wasser/Zement-Faktor des Gemsiches 0,65 beträgt. Dieser Matrix werden 3 Masseteile aus dem 40 mm langen Schnittgut entsprechend Fig. 1 und Fig. 2 mit aufgerauhten Oberfläche und 0.15 mm Durchmesser zugegeben. Das Faserschnittgut wird in der Form von verdrallten Monofilbündeln der Matrix beigemengt. Das darauffolgende Mischen wird 30 Sekunden lang geführt und in seinem Ergebnis lösen sich die verdrallten Bündel in Einzelfasern auf und verteilen sich gleichmässig in der Matrix.

Das die Fasern enthaltende Gemisch wird in Formen eingearbeitet und erhärten gelassen. Das Endprodukt ist zäh, von hoher Schlagfestigkeit, frei von Schrumpfungsrissen, in seiner Konsistenz dicht und weist eine glatte Oberfläche, sowie eine Beige-Zerreissfestigkeit von 14-15 MPa auf.

Zum Vergleich wurden der aufgrund der Rezeptur nach vorliegendem Beispiel hergestellten Matrix in der Einleitung dieser Beschreibung beschriebene, aus heterogenem Kunststoff hergestellte und auf ihrer Oberfläche mit Auswölbungen versehene dickere Kunststoffasern zugegeben. Zum Erreichen der Biege-Zerreissfestigkeit von 14-15 MPa mussten 15 Masseteile Fasermaterial, d.h. die fünffache Menge zugegeben werden, was nicht nur aus Wirtschaftlichkeitsgesichtspunkten nachteilig ist, aber auch ein Wegbleiben der entsprechenden Materialdichte, weiterhin der glatten Werkstückoberfläche zur Folge hat.

Beispiel 2

Ein Ausgleichsbetonunterbett wird nach dem erfindungsgemässen Verfahren hergestellt. Die Matrix wird aus 100 Masseteilen Zement Güte 350 PC, 200 Masseteilen Sand, Korngrösse 0-1 mm und soviel Wasser angesetzt, dass der Wasser/Zement-Faktor 0,57 beträgt. Diesem Gemisch werden 3 Masseteile aus 25 mm langem Schnittgut der erfindungsgemässen verdrallten Monofilbündel zugegeben. Die einzelnen Fasern sind 0,12 mm stark. Die verdrallten Faserbündel werden durch 40 sec lang anhaltendes Mischen in Einzelfasern zerlegt und diese in dem Gemisch gleichmässig verteilt. Das die Fasern enthaltende Gemisch wird auf dem Betonfussboden aufgetragen, geglättet und erhärten gelassen. Die Schlagfestigkeit der verfestigten Ausgleichsschicht ist gross und Schrumpfungsrisse sind nicht vorfindbar. Die Biege-Zerreissfestigkeit der Schicht beträgt 13,1 MPa, der Zähigkeitsindex 11. Wird einer Matrix der gleichen Zusammensetzung geschnittene Kunststoffasern zuzugeben, die gleichen Durchmesser und gleiche Länge sowie gleiche Faserfestigkeit und Menge aufweisen, enthalten aber keine Körnchen und nicht gemäss dem aufgrund der Figuren 1 und 2 beschriebenen Verfahren hergestellt wurden, so erhält man ein Endprodukt mit einer Biege-Zerreissfestigkeit von nur 9,4 MPa, was um ca. 40 % niedriger ist, als bei dem nach dem erfindungsgemässen Verfahren hergestellten Material.

Vorteil der Erfindung ist, dass die mechanischen und physikalischen Parameter des mit aufgerauhte Oberfläche aufweisenden Fasern gefertigten Endproduktes vorzüglich sind, da im Körper ein fein verteiltes optimal angeordnetes Fasergerüst vorhanden ist, dessen Einzelfasern sicher und gleitfrei in der Matrix eingebettet liegen. Hierbei sind auch die Wirtschaftlichkeitskennwerte der Bauteileproduktion besser als die der bereits früher bekannten Ausführungslösungen ähnlicher Bestimmung.

Die Erfindung beschränkt sich natürlich keineswegs auf die vorstehend dargelegten Beispiele, sondern kan innerhalb des durch die Ansprüche definierten Schutzumfanges auf vielerlei Weise Verwirklicht werden.

## Ansprüche

1. Verfahren zur Herstellung von Körpern, insbesondere Bauteilen, in dessen Verlaufe aus hydraulischem Bindemittel, Zuschlagstoff und Wasser eine Matrix (ein Gemisch) hergestellt wird, der Kunststoffasern zugemischt werden, das Gemisch - gegebenenfalls nach seiner Formung - erhärtet oder/und erhärten gelassen wird, **dadurch gekennzeichnet,** dass der Matrix durch inerte Körnchen (2) gebildeten Füllstoff enthaltende, und durch Herausreissen der entlang der Oberflächen liegenden inerten Körnchen (2) aufgeräuhte Oberflächen aufweisende Kunststoffasern (1) zugemischt werden.

2. Verfahren nach Anspruch 1, **dadurch gekennzeichnet,** dass Kunststoffasern in einer Menge von 0,05-20,0 Masse%, vorzugsweise 0,1-1,0 Masse% zur Matrix - auf deren trockene, wasserfreie Masse bezogen - zugemischt werden.

3. Verfahren nach Anspruch 1 oder 2, **dadurch gekennzeichnet,** dass der Matrix Monofasern zugemischt werden, die Länge von 10-100 mm, vorzugsweise 20-60 mm und Durchmesser (Stärke) von 0,04-0,8 mm, vorzugsweise 0,1-0,2 mm aufweisen, und mit aus anorganischem Stoff bestehenden inerten Körnchen (2) von Durchmesser 1-30 μm gefüllt sind.

4. Verfahren nach einem der Ansprüche 1-3, **dadurch gekennzeichnet,** dass der Matrix aus Polyolefin, vorzugsweise Polypropylen und/oder Polyäthylen und/oder deren Gemisch und/oder deren Kopolymeren bestehenden Monofasern zugemischt werden.

5. Verfarhen nach einem der Ansprüche 1-4, **dadurch gekennzeichnet,** dass zur Matrix formgestaltete, veränderliche Querschnittsform aufweisende oder/und gewellte Kunststoffasern zugegeben werden.

6. Verfahren nach Anspruch 5, **dadurch gekennzeichnet,** dass der Matrix voneinander in gleichen oder im wesentlichen gleichen Abständen angeordnete, im Verlaufe der Erzeugung durch Kaltfliesspressen hergestellte, abgeplattete Formationen enthaltende Kunststoffasern zugemischt werden.

7. Verfahren nach einem der Ansprüche 1-6, **dadurch gekennzeichnet,** dass der Matrix verdrehte, und in ihrem verdrehten Zustand (in der verdrehten Form) durch Wärmezufuhr fixierte Kunststoffaserbündel zugemischt werden.

8. Verfahren nach Anspruch 7, **dadurch gekennzeichnet,** dass der Matrix auf eine Länge von 15-70 mm geschnittene und um ihre geometische Längsachse um 90-360°, vorteilhafterweise um 180-270° verdrehte Faserbündel zugemischt werden.

9. Verfahren nach einem der Ansprüche 1-8, **dadurch gekennzeichnet,** dass antistatisierte oder/und hydrofobisierte Kunststoffasern der Matrix zugemischt werden.

10. Verfahren zur Herstellung von aufgeraühte Oberfläche aufweisenden, insbesondere zur Verstärkung von aus nacherhärtenden Materialien gefertigten Körpern dienenden Kunststoffasern, in dessen Verlaufe aus einem Plastgrundstoff durch Strecken und Ziehen Fasern hergestellt werden, **dadurch gekennzeichnet,** dass die Fasern (1) aus durch inerte Körnchen gebildeten Füllstoff enthaltendem Kunststoff hergestellt werden, und sich die infolge der Faserstreckung gelockerten entlang der Oberfläche befindlichen inerten Körnchen (2) aus der Faser durch Reibeinwirkung herausgerissen und an ihrer Stelle, und/oder entlang dieser Stelle auch aufgerissene Fäserchen (5) enthaltende Hohlräume (4) erzeugt und - gegebenenfalls - die Oberfläche der in den Fasern verbleibenden inerten Körnchen (2) durch einen Reibarbeitsgang freigelegt werden.

Fig. 1

Fig.2

EP 0 318 137 A2